# EUROPEAN PATENT SPECIFICATION

(11) **EP 1 030 878 B1**
(45) Date of publication and mention of the grant of the patent: **10.10.2001**
(21) Application number: 98967142.5
(22) Date of filing: 09.11.1998
(51) Int. Cl.: C08K 5/00, C08L 23/10

(54) **COLOURED POLYPROPYLENE COMPOSITIONS**
GEFÄRBTE POLYPROPYLENZUSAMMENSETZUNGEN
COMPOSITIONS DE POLYPROPYLENE COLOREES

(30) Priority: 07.11.1997 FI 974177
(43) Date of publication of application: 30.08.2000
(73) Proprietor: Borealis Technology Oy, 06101 Porvoo (FI)
(72) Inventor: CROZIER, Hérve, 3960 Stathelle (NO); FOLLAND, Rick, 1370 Jodoigne (BE)
(74) Representative: Sundman, Christoffer
(86) International application number: EP9807215
(87) International publication number: WO9924503

(56) References cited:
- EP-A- 0 151 883
- EP-A- 0 369 658
- EP-A- 0 417 319
- GB-A- 1 104 665

## Description

### Background of the Invention

### Field of the Invention

The present invention relates to coloured polymer compositions. In particular, the present invention concerns compositions of propylene homo- and copolymers suitable for caps and closures and similar polymer articles. The invention also concerns a process for preparing such compositions. Finally, the present invention relates to the use of the new propylene polymers or copolymers for the manufacture of products by melt stage processing, e.g., by blow moulding, thermoforming, injection moulding and sheet or film extrusion.

### Description of Related Art

To an increasing extent, caps and closures of various design for drinks, food, household, hygiene, health-care, oils and chemicals and other applications are nowadays manufactured from polymeric materials. This is partly due to the requirement for high productivity, i.e. short processing cycle, which becomes crucial for the mass production of carbonated soft drinks caps that are usually obtained by either injection moulding or compression moulding techniques.

Propylene homo- and copolymers having excellent resistance to heat and chemicals as well as attractive mechanical properties, such as stiffness and impact resistance, are becoming a particularly interesting materials for these applications.

There are, however, some problems related to the prior art. Thus, nearly all caps and closures manufactured from polymeric materials are coloured. It has been experienced that pigments may have a nucleating effect on polypropylene and variation in intensity of this effect from one colour to another will result in dimensional variations because of differences in the shrinkage associated with the nucleation.

### Summary of the Invention

It is an object of the present invention to eliminate the problems related to the prior art and to provide novel coloured polypropylene compositions having consistent shrinkage and improved mechanical properties highly suited to the manufacture of injection moulded or compression moulded products which can be used as caps and closures.

A second object of the invention is to provide a process for preparing novel polypropylene compositions of the above kind.

It is still a further object of the present invention to provide products of polypropylene compositions by injection moulding or compression moulding techniques.

These and other objects, together with the advantages thereof over known processes and products, which shall become apparent from the specification which follows. are accomplished by the invention as hereinafter described and claimed.

The invention is based on blending colouring pigments with propylene homo- or copolymers nucleated for high crystallinity. In connection with the present invention it has been found that nucleating the PP resin may reduce the differences between the various degrees of shrinkage of polymer compositions coloured with different pigments. However, conventional inorganic or organic nucleating agents, e.g. talc. are either too weak to have a dominating effect or they can give rise to undesired reactions with the pigments. The conventional agents can also be difficult to disperse and there can be restrictions on food contact approvals (e.g. NaBz). Some are non-economical (e.g. sorbitol derivatives) for use for PP for caps and closures.

According to the present invention, the pigments are therefore blended with propylene polymers or copolymers nucleated with polymeric vinyl compounds to provide coloured polypropylene compositions having a consistent shrinkage during melt processing irrespective of the colouring pigment used.

The use of vinyl compounds, such as polymers of vinyl cycloalkanes and 3-methyl-1-butene, as nucleating agents in the form of reactor made blends of polypropylene and polymerised vinyl compounds or polypropylene compounds, is suggested in the prior art, cf. EP Patent Specifications Nos. 0 152 701, 0 151 883, 0 368 577 and 0 417 319, However, none of the prior art publications makes any reference to the use of these highly nucleated materials for the production of coloured caps and closures.

According to the present invention it has now surprisingly been found that propylene homo- or copolymers nucleated with a component containing polymerized vinyl compound units will give excellent dimensional consistency by dominating the pigments' nucleating effect with its strong nucleation. The strongly nucleating effect of the polymeric nucleating agent is apparent from the high crystallisation temperature of the polymer. Thus, the crystallisation temperature of the material is at least 7 °C, preferably 10 °C and in particular over 13 °C higher than the crystallisation temperature of the corresponding non-nucleated polymer and the material exhibits a fast crystallisation rate. Caps of various colours moulded with a polypropylene nucleated with a polymerised vinyl compound grade to provide a composition according to the present invention will therefore have practically the same dimensions.

More specifically, the polymer composition according to the present invention is characterized by what is stated in the characterizing part of claim 1.

The process according to the present invention for preparing coloured polypropylene compositions is characterized by what is stated in the characterizing part of claim 10,

The present compositions can be used in any kind of polymer articles. Particular advantages are obtained by applying the compositions to the manufacture of injection moulded and/or compression moulded products as well as articles produced by thermoforming, blow moulding and film and sheet extrusion,

The invention achieves a number of considerable advantages. In particular it should be pointed out that the strong nucleating effect of a polymeric nucleating agent containing polymerized vinyl compound units will give potential for cycle time reduction because solidification in the mould will happen earlier and faster compared to any other PP grade nucleated with conventional nucleating agents. There are also other benefits of the present invention compared to the use of additive nucleating agents that are of particular interest for the manufacture of caps and closures: the invention will provide for a reduction of the number and amount of additives. The polymeric nucleating agents are inert towards other additives/pigments, they give no taste and odour, no migration / plate out, excellent dispersion of the nucleating effect and more consistent nucleation. These positive effects are accompanied with clearly smaller amounts of the polymeric nucleating agents compared to additive nucleation.

The characteristics of the polymer compositions can easily he tailored in respect to MFR. type of polymer (homopolymer. copolymer. impact modified ...) as well as in respect to physical properties.

Next. the invention will be more closely examined with the aid of the following detailed description.

### Detailed Description of the Invention

The compositions of the present invention include a polymeric component comprising a propylene polymer nucleated with polymerized vinyl compounds together with at least one colouring agent. The compositions can contain other components known in the art. such as adjuvents. additives and fillers.

The colouring agent used in the present invention can be any colouring pigment. organic or inorganic. having a nucleating effect of various strength on propylene homo- or copolymers. By dominating the nucleating effect, if any. of the pigment, the nucleated propylene homo- or copolymer will provide a controlled and predictable shrinkage irrespective of the pigment.

Examples of colouring pigments are white pigments. such as titanium dioxide. yellow/orange pigments such as isoindolinone or azocondensation. red/violet such as quinacridone or diketo pyrrolo pyrol. blue/green pigments such as ultramarine blue or Cu Phtalocyanine blue. and black pigments such as carbon black. The amount of pigments is usually 0.01 to 5 % by weight of the polypropylene component.

For the purpose of the present invention. the terms "colouring agent" and "colouring pigment" are interchangeably used for designating any material used to give the final product a desired colour which is different from the one it would have without the use of that specific material.

The main component of the present compositions is the nucleated propylene polymer which contains a polymerized vinyl compound in an amount of 0.0001 to 1 %, in particular about 5 to 1000 ppm, by weight of the composition. By this nucleation it is possible to attain a polypropylene having a high degree of crystallinity. a high crystallization temperature, small crystal size and a great crystallization rate. These kinds of compositions can be used for the preparation of moulded products. They exhibit improved optical and physical properties.

The nucleation of the propylene polymers can be carried out by modifying the polymerization catalyst with vinyl compounds and using the modified catalyst for polymerization of propylene optionally in the presence of comonomers to provide a propylene homopolymer or copolymer containing about 0.0001 to 1 % (calculated from the weight of the composition) polymerized vinyl compounds. Another approach for nucleating propylene polymers comprises blending polypropylene with polymers containing vinyl compound units.

For the purpose of the present invention "vinyl compounds" are compounds having the formula I 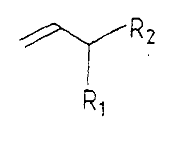 wherein R₁ and R₂ together form a 5 or 6 membered saturated or unsaturated or aromatic ring or they stand independently for a lower alkyl comprising 1 to 4 carbon atoms.

The following specific examples of vinyl compounds can be mentioned: vinyl cycloalkanes, in particular vinyl cyclohexane, vinyl cyclopentane, vinyl-2-methyl cyclohexane and vinyl norbornane, 3-methyl-1-butene, styrene, p-methyl-styrene, 3-ethyl-1-hexene or mixtures thereof. Vinyl cyclohexane (VCH) is a particularly preferred monomer but, for example, 3-methyl-1 -butone can be used as a monomer or comonomer to adjust the crystallisation temperature.

For the purpose of the present invention "nucleated propylene polymer" stands for a polymer having an increased and controlled degree of crystallinity preferably amounting to over 50 % and preferably having a crystallization temperature of more than 7 °C, preferably over 10 °C and in particular over 13 °C of the Tₑᵣ of the corresponding non-nucleated polymer. Using MgCl₂-supported high-yield Ziegler-Natta catalysts crystallization temperatures of more than 120 °C, preferably over 124 °C and in particular over 126 °C can be obtained. In compositions containing colouring pigments having a nucleating effect, particularly advantageous results are obtained by using polymers having a crystallization temperature over 15 °C higher than that of the corresponding non-nucleated polymer (for a polymer produced with the above-mentioned ZN-catalyst, 128 °C).

According to a preferred embodiment of the present invention, modification of the catalyst by polymerizing a vinyl compound, such as VCH, in the presence thereof is performed in an inert fluid which does not dissolve the polymer formed (e.g. polyVCH). One particularly preferred polymerization medium comprises a viscous substance, in the following a "wax", such as an oil or a mixture of an oil with a solid or semi-solid polymer (oil-grease). The viscosity of such a viscous substance is usually 1,000 to 15,000 cP (1 - 15 Ns/m²) at room temperature. The advantage of wax prepolymerization is that the catalyst can be prepolymerized, stored and fed into the process in the same media and catalyst wax preparation and prepolymerization is performed in the same process device. Due to the fact that no washing, drying, sieving and transferring thus are needed, the catalyst activity is maintained (cf. Finnish Patent No. 95387). The present process is inexpensive because high catalyst concentrations and high PP production capacities can be used. Also the amount of waste is diminished because the medium used during polymerization of the vinyl compound does not have to be removed.

According to another preferred embodiment. the method for improving the crystallinity and transparency of polypropylene by blending a crystalline polypropylene with a vinyl cycloalkane polymer is carried out by melt-kneading the crystalline polypropylene with the crystal nucleating agent. compounding the crystal nucleating agent or reactor made blend of the crystal nucleating agent and PP with the crystalline polypropylene and melt kneading the mixture during film formation, and compounding the master batch of the crystal nucleating agent with the crystalline polypropylene.

The vinyl compound units of the blending and compounding process can be derived from any of the units identified in the above formula 1 in connection with the first embodiment of the invention.

As catalyst any stereospecific catalyst for propylene polymerization can be used. which is capable of catalyzing polymerization and copolymerization of propylene and comonomers at a pressure of 10 to 100 bar, in particular 25 to 80 bar, and at a temperature of 40 to 110 °C, in particular 60 to 110 °C. Ziegler-Natta as well as metallocene catalysts can be used.

Generally. the Ziegler-Natta catalyst used in the present invention comprises a catalyst component, a cocatalyst component, an external donor, the catalyst component of the catalyst system primarily containing magnesium, titanium, halogen and an internal donor.

Examples of suitable catalyst systems are described in, for example, Finnish Patents Nos. 86866. 96615 and 88047 and 88048.

One particularly preferable catalyst, which can be used in the present invention, is disclosed in FI Patent No. 88047. Another preferred catalyst is disclosed in Finnish Patent Application No. 963707.

A catalyst system useful in the present process can be prepared by reacting a magnesium halide compound with titanium tetrachloride and an internal donor. The magnesium halide compound is. for example, selected from the group of magnesium chloride, a complex of magnesium chloride with a lower alkanol and other derivatives of magnesium chloride. MgCl₂ can be used as such or it can be combined with silica, e.g. by absorbing the silica with a solution or slurry containing MgCl₂. The lower alkanol used can be preferably methanol or ethanol. particularly ethanol.

The titanium compound used in the preparation of the procatalyst is preferably an organic or inorganic titanium compound, having an oxidation state of titanium of 3 or 4. Also other transition metal compounds, such as vanadium, zirconium, chromium, molybdenum and tungsten compounds can be mixed with the titanium compound. The titanium compound usually is halide or oxyhalide, an organic metal halide. or a purely metal organic compound. in which only organic ligands have been attached to the transition metal. Particularly preferable are the titanium halides, especially TiCl₄. Preferably the titanation is carried out in two or three steps.

The Ziegler-Natta catalyst used can also be an heterogeneous unsupported TiCl₃ based catalyst. This kind of catalysts are typically solid TiCl₃ in a delta crystalline form which are activated with aluminium-chloride-alkyls. such as diethylaluminiumchloride. The solid TiCl₃ catalyst are typically prepared by reduction of TiCl₄ with aluminium-alkyls and/or aluminium-chloride-alkyls, possibly combined with heat treatment to maximise the desired delta crystalline form of TiCl₃. The performance, especially stereospecificity, of these catalyst can be improved by using Lewis-bases (electron donors), such as esters, ethers or amines.

The activity and stereospecificity of these heterogeneous unsupported TiCl₃ based catalysts are typically so low that propylene polymers or copolymers prepared require purification from catalyst residues and removal of some atactic non-crystalline polymer.

The alkoxy group of the phthalic acid ester used comprises at least five carbon atoms, preferably at least 8 carbon atoms. Thus. as the ester can be used for example propylhexyl phthalate, dioctyl phthalate, dinonyl phthalate, diisodecyl phthalate, di-undecyl phthalate. ditridecyl phthalate or ditetradecyl phthalate.

The partial or complete transesterification of the phthalatic acid ester can be carried out e.g. by selecting a phthalic acid ester - a lower alcohol pair. which spontaneously or with the aid of a catalyst, which does not damage the procatalyst composition, transesterifies the catalyst at an elevated temperatures. It is preferable to carry out the transesterification at a temperature, which lies in the range of 110 to 150 °C. preferably 120 to 140 °C.

The catalyst prepared by the method above is used together with an organometallic cocatalyst and with an external donor. Generally, the external donor has the formula IV

RₙR'ₘSi(R"O)₄₋ₙ₋ₘ

wherein
- R and R': can be the same or different and they stand for a linear, branched or cyclic aliphatic. or aromatic group:
- R": is methyl or ethyl;
- n: is an integer 0 to 3:
- m: is an integer 0 to 3: and
- n+m: is 1 to 3.

The aliphatic groups in the meanings of R and R' can be saturated or unsaturated. Linear C, to C₁₂ hydrocarbons include methyl, ethyl, propyl, butyl, octyl and decanyl. As examples of suitable saturated branched C₁₋₈ alkyl groups. the following can be mentioned: isopropyl, isobutyl, isopentyl. tert-butyl, tert-amyl and neopentyl. Cyclic aliphatic groups containing 4 to 8 carbon atoms comprise, e.g., cyclopentyl, cyclohexyl. methyl cyclopentyl and cycloheptyl.

A group of interesting donors is formed by strongly co-ordinating donors which form relatively strong complexes with catalyst surface. mainly with MgCl₂ surface in the presence of aluminium alkyl and TiCl₄. The donor components are characterised by a strong complexation affinity towards catalyst surface and a sterically large and protective hydrocarbon (R'). Such external donors can be selected from the group consisting of dicyclopentyl dimethoxysilane. diisopropyl dimethoxysilane. di-isobutyl dimethoxysilane. and di-t-butyl dimethoxysilane.

An organoaluminum compound is used as a cocatalyst. The organoaluminium compound is preferably selected from the group consisting of trialkylaluminium, dialkyl aluminium chloride and alkyl aluminium scsquichloride.

The metallocene catalyst comprises a metallocene/activator reaction product impregnated in a porous support at maximum internal pore volume. The catalyst complex comprises a ligand which is typically bridged, and a transition metal of group IVA... VIA, typically a metal halide, and aluminium alkyl. The ligands can belong to group of heterocyclic substituted or unsubstituted compouns. e.g. indocenes, naftenes. or any other bulky compound which can control the stereoselectivity of the catalyst especially when ligands are bridged together with silane or other chemical bond. The activator is selected from a group in which are derivates of water and aluminium alkyls e.g. trimethyl aluminium, triethyl aluminium, and tri t-butyl aluminium, or another compound capable of activating the complex. The metallocene/activator reaction product. a solvent capable of dissolving it. and a porous support are brought into mutual contact. the solvent is removed and the porous support is impregnated with the metallocene/activator reaction product. the maximum amount of which corresponds to the pore volume support. cf. International PCT Application No. PCT/FI94/00499.

One typical structure of metallocene compound is bridged bis(2-R-4-R'-indenyl) M Cl₂, wherein both R and R' are aliphatic, cycloaliphatic or aromatic hydrocarbons having 1 to 18 C atoms. R' is typically phenyl or naphthyl. and R is typically methyl or ethyl. M is a transition metal, typically titanium. zirconium or hafnium. R and R' may contain heteroatoms. such as silicon, nitrogen, phosphorous or germanium. The bridge between the indenyls is made from 1 to 3 atoms, such as carbon, silicon, nitrogen, phosphorous or germanium. A typical bridge is dimethylsilyl or ethyl. An example of such a metallocene compound is dimethylsilyl-bis(2-methyl-4-phenyl-indenyl)zirconium dichloride.

Following the modification of the catalyst with the vinyl compound of the first preferred embodiment of the invention, the catalyst is optionally prepolymerized with propylene and/or another 1-olefin to provide a prepolymerized catalyst composition which is used for polymerization of propylene optionally together with comonomers.

The propylene homo- or copolymer can have a unimodal or bimodal molar mass distribution. Thus, the equipment of the polymerization process can comprise any polymerization reactors of conventional design for producing propylene homo- or copolymers. For the purpose of the present invention, "slurry reactor" designates any reactor, such as a continuous or simple batch stirred tank reactor or loop reactor. operating in bulk or slurry and in which the polymer forms in particulate form. "Bulk" means a polymerization in reaction medium that comprises at least 60 wt-% monomer. According to a preferred embodiment the slurry reactor comprises a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred-tank slurry reactors. as described in WO 94/26794, or one or more gas phase reactors. Preferably the reactors used are selected from the group of loop and gas phase reactors and, in particular, the process employs at least one loop reactor and at least one gas phase reactor. This alternative is particularly suitable for producing bimodal poly-propylene. By carrying out the polymerization in the different polymerization reactors in the presence of different amounts of hydrogen, the MWD (molecular mass distribution) of the product can be broadened and its mechanical properties improved. It is also possible to use several reactors of each type, e.g. one loop reactor and two or three gas phase reactors or two loop reactors and one gas phase reactor, in series.

In every polymerization step it is possible to use also comonomers selected from the group of ethylene, propylene. butene, pentene, hexene and alike as well as their mixtures.

In addition to the actual polymerization reactors used for producing the propylene homo- or copolymer, the polymerization reaction system can also include a number of additional reactors. such as pre- and/or postreactors. The prereactors include any reactor for prepolymerizing the catalyst with propylene and/or other 1-olefins. The postreactors include reactors used for modifying and improving the properties of the polymer product. All reactors of the reactor system are preferably arranged in series.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate which will make the particles act as a fluid. The fluidizing gas can contain also inert carrier gases, like nitrogen and also hydrogen as a modifier. The fluidized gas phase reactor can be equipped with a mechanical mixer.

The gas phase reactor used can be operated in the temperature range of 50 to 115 °C, preferably between 60 and 110°C and the reaction pressure between 5 and 50 bar and the partial pressure of monomer between 2 and 45 bar.

The pressure of the effluent, i.e. the polymerization product including the gaseous reaction medium. can be released alter the gas phase reactor in order optionally to separate part of the gaseous and possible volatile components of the product. e.g. in a flash tank. The overhead stream or part of it is recirculated to the reactor.

The propylene homo- or copolymer produced preferably has a MWD of 2 - 10 and a MFR₂ in the range of 0.01 - 1500 g/10 min., in particular 0.05 - 500 g/10 min. MFR₂ values disclosed herein are measured according to ISO 1133, 230°C, using 2.16 kg load.

In the second embodiment of the invention, wherein a uni- or bimodal propylene homo- or copolymer is blended and compounded with a polymer comprising vinyl compound units, the blending is carried out as known in the art using said nucleating polymeric agent.

By means of both embodiments, a propylene homopolymer or copolymer is produced with high-yield Ziegler-Natta catalysts, having high stiffness, an increased overall degree of crystallization and a crystallization temperature of the propylene homopolymer fraction of more than 120 °C, preferably over 124 °C and in particular over 126 °C. The degree of crystallization for a propylene homopolymer is generally over 48 %, and often over 50 %.

The amount of the nucleating polymeric agent is, in case of propylene polymers or copolymers, about 0.0001 to 1 wt-%, and in case of polypropylene blends about 0.0001 to 0.5 wt-%.

This nucleated polypropylene (100 parts by weight) is blended with 0.01 to 5 parts by weight of the coloured pigment of choise. The particle size of the pigment is usually 0.01 to 1000 micrometre and more often 0.1 to 10 micrometre.

The colouring agent is usually in the form of a masterbatch comprising also a polymer carrier. The blending with the polypropylene is directly done at the conversion machine (e.g. extruder, injection moulding machine...) by dosing the pigment with a gravimetric side feeder. When the colouring agent is liquid it is dosed with a liquid pump.

The present polymers and copolymers of propylene can be blended and optionally compounded with additives and adjuvants conventionally used in the art. Thus, suitable additives include antistatic agents, flame retardants, light and heat stabilizers, reinforcement agents, pigments and carbon black. Fillers such as mica, CaCO₃, talc and wollastonite can also be used. Further; the polymers and copolymers can be blended with non-nucleated propylene and/or with other polymers, in particular other polyolefins, such as LD-, LLD-, MD- and HD-polyethylenes and polybutylene.

Compositions according to the invention containing pigments will exhibit very small variation in shrinkage irrespective of the colouring agent used. As the results indicated below in Table 1 show, the variation in shrinkage in both flow and cross direction is less than 5 % for white, red and blue pigments compared to conventional, non-nucleated polymers having a variation of shrinkage in the range of 10 to 20 %, The fact that the pigments' nucleating effect is clearly dominated by the nucleated polypropylene with its strong nucleation is apparent from the results showing that the shrinkage is practically constant irrespective of whether or not the compositions contain any colouring pigment at all. This feature is rather surprising in particular when comparing the shrinkage of the present compositions to conventional talc-nucleated homopolymer compositions which have the same variation as non-nucleated polymer compositions (or even greater) in transversal direction to the flow.

The homopolymer or copolymer composition thus obtained can be used for the manufacture of moulded articles, in particular articles processed by blow moulding, injection moulding, compression moulding. thermoforming and sheet or film extrusion. pipe and cable extrusion.

Particularly useful products include caps and closures for various food. in particular carbonated soft drinks, household, hygiene, health-care and other applications. Further interesting products and articles include bottles. containers and pails.

### Examples

The following non-limiting examples illustrate the invention,

### Example 1

### Catalyst modification with polymerisation of vinyl cycloalkane:

A high yield MgCl₂ supported TiCl₄ Ziegler-Natta catalyst prepared according to Finnish patent FI 88047 was dispersed into a mixture of oil and crease (Shell Ondina Oil N 68 and Fuchs Vaseline Grease SW in 3.2:1 Oil/grease volume ratio). The titanium content of the catalyst was 2.5 wt-%, and the concentration of the catalyst in oil-grease mixture was 176 g cat/dm³. Triethylaluminium (TEAL) was added to the catalyst dispersion in a TEAL to titanium mole ratio of 1.5. After that vinylcyclohexane (VCH) was added to the reaction mixture. and the VCH to catalyst weight ratio was 1:1. The reaction mixture was mixed in a temperature of 55 °C until the concentration of unreacted VCH in the reaction mixture was 350 ppm by weight.

### Example 2

### Polymerisation of propylene

The modified catalyst in the oil grease mixture (catalyst mud) obtained from example 1, TEAL. dicyclopentyldimethoxysilane and propylene were continuously fed to a process consisting of a prepolymerisation reactor and a loop rector.

Before mixing, the TEAL and dicyclopentyldimethoxysilane in a 10.7 w/w ratio was contacted with the catalyst mud. After that the mixture was transferred with propylene, containing the desired amount of hydrogen as molecular weight regulating agent, to a continuous, stirred prepolymerisation reactor. After the prepolymerisation, the reaction mixture together with additional propylene and hydrogen was fed to a continuous loop reactor operating at 68 °C. The obtained PP homo-polymer-propylene slurry containing the catalyst was continuously recovered from the loop reactor to a flashing unit where the liquid propylene was vaporised and the remaining solid polymer particles were continuously recovered from the flashing unit. After purging the unreacted monomers, the required stabilisers and other additives were added and the polymer powder was pelletised with an extruder.

The final polymer had an MFR₂ of 25 g/10 min. and insolubles in boiling n-heptane 96.0 wt-%.

### Example 3

### Dimensional consistency

The PP homopolymer described in previous examples and a commercial non nucleated PP homopolymer (MFR 12) and a commercial talc-nucleated PP homopolymer (MFR35) were moulded by injection moulding (machine: Netstal 300 tons, N1570/300MPS) in the form of a box bac characterised by:
- thickness: 1.8 mm
- length: 370 mm
- width: 185 mm
- height: 95 mm
- injection: cold runner
- max flow length: 300 mm

4 preparations for each of the 3 polypropylenes were moulded:
1. natural
2. 100 parts by weight + 2 parts by weight of white masterbatch (titanium dioxide based white pigment)
3. 100 parts by weight + 2 parts by weight of red masterbatch (quinacridone based red pigment)
4. 100 parts by weight + 2 parts by weight of dark blue masterbatch (Cu Phtalocyanine blue based blue pigment)
The preparations were blended batch-wise in a bag to prepare roughly 5 kg for each.

Typical moulding conditions were:
- Injection speed: 100 mm/sec
- Holding pressure: 300 bar
- holding pressure time: 12 sec
- cooling time: 15 sec
- cycle time: 35 sec

Dimension of the boxes were measured with an optical device between lines of grid both in flow and in transverse direction.

Shrinkage, reported in Table 1. is calculated by comparing the dimension measured to the nominal mould dimension. The cross direction has proved to be determinant in characterising the shrinkage behaviour of a PP material.

**Table 1.**

| **Shrinkage (%) measured on injection moulded boxes of constant weight** | | | |
|---|---|---|---|
| | | Shrinkage (%) | |
| Grade | Colour | Flow direction | Cross direction |
| Homopolymer of Example 2 | Natural | 1.68 | 1.90 |
| | White | 1.68 | 1.95 |
| | Red | 1.70 | 1.93 |
| | Blue | 1.70 | 1.90 |
| | Delta Max | 0.02 | 0.05 |
| Non-nucleated PP homopolymer | Natural | 1.71 | 1.58 |
| | White | 1.63 | 1.64 |
| | Red | 1.71 | 1.74 |
| | Blue | 1.79 | 1.96 |
| | Delta Max | 0.16 | 0.38 |
| Talc-nucleated PP homopolymer | Natural | 1.59 | 1.54 |
| | White | 1.62 | 1.55 |
| | Red | 1.63 | 1.71 |
| | Blue | 1.63 | 1.96 |
| | Delta Max | 0.04 | 0.41 |

The non-nucleated PP homopolymer shrank to different extent with different colours. That also attested the different nucleating effect of the different pigments which were also confirmed by measuring crystallisation temperatures of the coloured boxes which were 115.8 °C, 115.7 °C, 119.5 °C and 129.3 °C for the natural. white, red, and blue respectively. Crystallisation temperature was measured by differential scanning calorimetry by weighting 3 mg sample placed in a furnace heated at 10 °C/min from room temperature to 220 °C and then cooled at 10 °C/min to room temperature to get the crystallisation exothermic peak from which the maximum gives the crystallisation temperature.

The talc-nucleated PP homopolymer behaved similarly to the non-nucleated PP homopolymer in the ESNs that shrinkage also varied a lot depending on the colour.

The PP homopolymer (related to the present invention) exhibited practically the same shrinkage. hence the same box dimension, for all the preparations.

### Example 4

### Cycle time

The three PP homopolymer samples mentioned in Example 3 were injection moulded in the form of caps on a Netstal 120 tons, HP 1200/445. The mould was a 3 plate mould with 4 cavities, and unscrewing of the cap's threads. The caps were oval. with inner threads, with a hinged flip top. Dimension were: length 50 mm, height 30 mm. width 38 mm, wall thickness 1.2 mm.

Table 2 indicates the moulding parameters.

**Table 2.**

| **Moulding parameters** | | | | |
|---|---|---|---|---|
| | | PP homopolymer of Example 2 | non-nucleated PP homopolymer | talc-nucleated PP homopolymer |
| MFR | g/10 min | 25 | 12 | 35 |
| injection speed | mm/min | 50 | 50 | 50 |
| holding pressure | bar | 300 | 500 | 300 |
| holding pressure time | sec | 3 | 3 | 3 |
| cooling time | sec | 9 | 11.5 | 10.5 |
| CYCLE TIME | SEC | 18.5 | 21 | 20 |

The polypropylene nucleated with a polymerised vinyl compound could be moulded with faster cycle because it started to freeze (crystallise) in the mould earlier and faster that the non-nucleated and talc-nucleated PP homopolymers. Shortest cycle time was determined by decreasing cooling time until the caps deformed at ejection because they were not solidified enough.

### Example 5

### Dimensional consistency

The three PP homopolymer samples of Example 3 were also injection moulded according to Example 4. The conditions were identical except for the cooling time which was 11.5 seconds for all them, for the natural but also with red and blue coloured specimens prepared as described in Example 3.

Shrinkage was measured with the height of the caps, compared to the nominal dimension.

**Table 3.**

| **Shrinkage in %** | | | |
|---|---|---|---|
| | Natural | Red | Blue |
| PP homopolymer of Example 2 | 1.80 | 1.80 | 1.80 |
| non-nucleated PP homopolymer | 1.25 | 1.41 | 1.71 |
| talc-nucleated PP homopolymer | 1.35 | 1.41 | 1.71 |

As observed in Example 3, the polypropylene nucleated with a polymerised vinyl compound is superior to the non-nucleated and the talc-nucleated PP homopolymers in the sense that shrinkage, hence dimension, was equal for natural, red and blue caps. On the other hand, variation was observed in dimension for the non-nucleated and talc-nucleated natural, red, and blue caps.

## Claims

1. Coloured polymer composition comprising
- a propylene polymer nucleated with a polymerized vinyl compound and having an at least 7 °C higher crystallization temperature than that of the corresponding non-nucleated polymer, and
- a colour pigment having a concentration of 0.01 to 5 wt-% calculated from the weight of the nucleated propylene polymer.

2. The composition according to claim 1, wherein the colour pigment has a nucleating effect on the propylene polymer.

3. The composition of claim 1 or 2, wherein the shrinkage of the composition, calculated by comparing the measured dimension of an injection moulded box with the nominal mould dimension, varies less than 5 % for different colour pigments.

4. The polymer composition according to claim 1, wherein the propylene polymer contains about 0.0001 to 1 % by weight of units derived from a vinyl compound of the formula 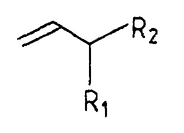 wherein R₁ and R₂ together form a 5 or 6 membered saturated or unsaturated or aromatic ring or they stand independently for a lower alkyl comprising 1 to 4 carbon atoms.

5. The polymer composition according to claim 4, wherein the propylene polymer contains cycloalkane units, in particular vinyl cyclohexane, vinyl cyclopentane, vinyl-2-methyl cyclohexane and vinyl norbomane, 3-methyl-1-butene, styrene, p-methyl-styrene or 3-ethyl-hexene units or mixtures thereof.

6. The polymer composition according to any of claims 1 to 5, wherein the nucleated propylene polymer comprises a propylene polymer copolymer polymerized in the presence of a catalyst modified with a polymer containing vinyl compound units.

7. The polymer composition according to any of claims 1 to 5, wherein the nucleated propylene polymer comprises a propylene homo- or copolymer blended with a polymer containing polymerised vinyl compound units.

8. The polymer composition according to any of the preceding claims, wherein the pigment is selected from the group of white pigments, yellow/orange pigments, red/violet pigments, blue/green pigments and carbon black.

9. The polymer composition according to claim 8, wherein the pigment is selected from the group of titanium dioxide, isoindolinone, azocondensation, quinacridone, diketo pyrrolo pyrol, ultramarine blue, Cu Phtalocyanine blue and carbon black.

10. A process for preparing a coloured polymer composition comprising a propylene polymer and a colour pigment, **characterized by** using a propylene polymer nucleated with a polymerized vinyl compound and having an at least 7 °C higher crystallization temperature than the corresponding non-nucleated polymer, the concentration of the colouring pigment being 0.01 to 5 wt-% calculated from the weight of the nucleated propylene polymer,

11. The process according to claim 10 wherein 100 parts by weight of a nucleated polypropylene composition containing about 0.0001 to 1 % by weight of units derived from a vinyl compound of the formula 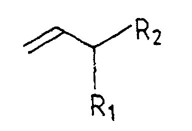 wherein R₁ and R₂ together form a 5 or 6 membered saturated or unsaturated or aromatic ring or they stand independently for a lower alkyl comprising 1 to 4 carbon atoms is blended with 0.01 to 5 parts by weight of a colouring pigment selected from the group of white pigments, green pigments, red pigments, blue pigments and carbon black, to provide a coloured polypropylene composition, the shrinkage of which varies less than 5 % for different colour pigments, said shrinkage being calculated by comparing the measured dimension of an injection moulded box with the nominal mould dimension,.

12. Use of a polymer composition according to any of claims 1 to 9 for the manufacture of polymer articles by injection moulding or compression moulding, thermoforming, blow moulding, film or sheet extrusion, pipe or cable extrusion.

13. The use of claim 12, wherein caps and closures for food, household, hygiene and health-care applications are manufactured.

## Patentansprüche

1. Gefärbte Polymerzusammensetzung, die umfaßt:
- Propylenpolymer, das mit einer polymerisierten Vinylverbindung nukleiert ist und eine um wenigstens 7°C höhere Kristallisationstemperatur als die des entsprechenden nicht nukleierten Polymers aufweist, und
- Farbpigment mit einer Konzentration von 0,01 bis 5 Gew.-%, bezogen auf das Gewicht des nukleierten Propylenpolymers.

2. Zusammensetzung gemäß Anspruch 1, wobei das Farbpigment einen Nukleationseffekt auf das Propylenpolymer hat.

3. Zusammensetzung gemäß Anspruch 1 oder 2, wobei die Schrumpfung der Zusammensetzung, berechnet durch Vergleichen der gemessenen Abmessung einer spritzgegossenen Box mit dem Nominalmaß der Form, weniger als 5 % für verschiedene Farbpigmente variiert.

4. Polymerzusammenetzung gemäß Anspruch 1, wobei das Propylenpolymer etwa 0,0001 bis 1 Gew.-% an Einheiten enthält, die von einer Vinylkomponente mit der Formel 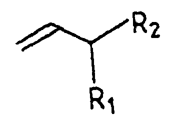 abgeleitet sind, wobei R₁ und R₂ zusammen einen 5- oder 6-gliedrigen gesättigten oder ungesättigten oder aromatischen Ring bilden oder diese unabhängig für Niederalkyl, das 1 bis 4 Kohlenstoffatome umfaßt, stehen.

5. Polymerzusammensetzung gemäß Anspruch 4, wobei das Propylenpolymer Cycloalkan-Einheiten, insbesondere Vinylcyclohexan, Vinylcyclopentan, Vinyl-2-methylcyclohexan und Vinylnorbornan, 3-Methyl-1-buten, Styrol, p-Methylstyrol oder 3-Ethylhexen-Einheiten oder Mischungen davon enthält.

6. Polymerzusammensetzung gemäß einem der Ansprüche 1 bis 5, wobei das nukleierte Propylenpolymer ein Propylencopopolymer, das in Gegenwart eines Katalysators, der mit einem Vinylverbindungs-Einheiten enthaltenden Polymer modifiziert ist, polymerisiert ist, umfaßt.

7. Polymerzusammensetzung gemäß einem der Ansprüche 1 bis 5, wobei das nukleierte Propylenpolymer ein Propylen-Homo- oder Copolymer, das mit einem Polymer, das polymerisierte Vinylverbindungs-Einheiten enthält, gemischt ist, umfaßt.

8. Polymerzusammensetzung gemäß einem der vorhergehenden Ansprüche, wobei das Pigment aus der Gruppe von weißen Pigmenten, gelben/orangenen Pigmenten, roten/violetten Pigmenten, blauen/grünen Pigmenten und Ruß ausgewählt ist.

9. Polymerzusammensetzung gemäß Anspruch 8, wobei das Pigment aus der Gruppe von Titandioxid, Isoindolinon, Azokondensation, Chinacridon, Diketopyrrolopyrol, Ultramarinblau, Cu-Phthalocyaninblau und Ruß ausgewählt ist.

10. Verfahren zum Herstellen einer gefärbten Polymerzusammensetzung, die Propylenpolymer und Farbpigment umfaßt, **gekennzeichnet durch** Verwenden eines Propylenpolymers, das mit einer polymerisierten Vinylverbindung nukleiert ist und eine um wenigstens 7°C höhere Kristallisationstemperatur als die des entsprechenden nicht nukleierten Polymers aufweist, wobei die Konzentration des Farbpigments 0,01 bis 5 Gew.-%, bezogen auf das Gewicht des nukleierten Propylenpolymers, beträgt.

11. Verfahren gemäß Anspruch 10, wobei 100 Gewichtsteile einer nukleierten Polypropylenzusammensetzung, die etwa 0,0001 bis 1 Gew.-% Einheiten enthält, die von einer Vinylverbindung mit der Formel 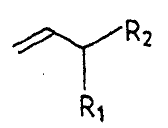 abgeleitet sind, wobei R₁ und R₂ zusammen einen 5- oder 6-gliedrigen gesättigten oder ungesättigten oder aromatischen Ring bilden oder diese unabhängig für Niederalkyl, das 1 bis 4 Kohlenstoffatome umfaßt, stehen, mit 0,01 bis 5 Gewichtsteilen Farbpigment, das aus der Gruppe von weißen Pigmenten, grünen Pigmenten, roten Pigmenten, blauen Pigmenten und Ruß ausgewählt wird, gemischt werden, um eine gefärbte Polypropylenzusammensetzung bereitzustellen, deren Schrumpfung weniger als 5 % für verschiedene Farbpigmente variiert, wobei die Schrumpfung durch Vergleichen der gemessenen Abmessung einer spritzgegossenen Box mit dem Nominalmaß der Form berechnet wird.

12. Verwendung einer Polymerzusammensetzung gemäß einem der Ansprüche 1 bis 9 zur Herstellung von Polymergegenständen durch Spritzgießen oder Formpressen, Warmformen, Blasformen, Film- oder Blattextrusion, Rohr- oder Kabelextrusion.

13. Verwendung gemäß Anspruch 12, wobei Kappen und Verschlüsse für Nahrungsmittel-, Haushalts-, Hygiene- und Gesundheitsanwendungen hergestellt werden.

## Revendications

1. Composition polymère colorée comprenant :
- un polymère propylène nucléé avec un composé vinyle polymérisé et ayant une température de cristallisation supérieure d'au moins 7°C à celle du polymère non-nucléé correspondant, et
- un pigment coloré ayant une concentration de 0,01 à 5 % en poids, calculée par rapport au poids du polymère propylène nucléé.

2. Composition selon la revendication 1, dans laquelle le pigment coloré a un effet nucléant sur le polymère propylène.

3. Composition selon la revendication 1 ou la revendication 2, dans laquelle le retrait de la composition, calculé en comparant la dimension mesurée d'une boîte moulée par injection et la dimension nominale du moule varie de moins de 5 % pour différents pigments colorés.

4. Composition polymère selon la revendication 1, dans laquelle le polymère propylène contient environ 0,0001 à 1 % en poids, d'unités dérivées d'un composé vinyle de formule : 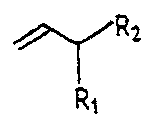 dans laquelle R₁ et R₂ pris ensemble forment un cycle à 5 ou 6 atomes, saturé ou non-saturé ou aromatique, ou représentent indépendamment un groupe alkyle inférieur comprenant 1 à 4 atomes de carbone.

5. Composition polymère selon la revendication 4, dans laquelle le polymère propylène contient des unités cycloalcane, en particulier des unités vinylcyclohexane, vinylcyclopentane, vinyl-2-méthylcyclohexane et vinylnorbornane, 3-méthyl-1-butène, styrène, p-méthylstyrène ou 3-éthylhexène ou des mélanges de celles-ci.

6. Composition polymère selon l'une quelconque des revendications 1 à 5, dans laquelle le polymère propylène comprend un copolymère de polymère propylène polymérisé en présence d'un catalyseur modifié, avec un polymère contenant des unités composé vinyle.

7. Composition polymère selon l'une quelconque des revendications 1 à 5, dans laquelle le polymère propylène nucléé comprend un homopolymère ou un copolymère propylène mélangé à un polymère contenant des unités composé vinyle polymérisé.

8. Composition polymère selon l'une quelconque des revendications précédentes, dans laquelle le pigment est choisi au sein du groupe des pigments blancs, des pigments jaunes/orangés, des pigments rouges/violets, des pigments bleus/gris et du noir de carbone.

9. Composition polymère selon la revendication 8, dans laquelle le pigment est choisi au sein du groupe comprenant le dioxyde de titane, l'iso-indolinone, les produits d'azocondensation, la quinacridone, le dicétopyrrolopyrrole, le bleu d'outremer, la phtalocyanone cuivrique bleue et le noir de carbone.

10. Procédé de préparation d'une composition polymère colorée comprenant un polymère propylène et un pigment coloré, **caractérisé par** l'emploi d'un polymère propylène nucléé avec un composé vinyle polymérisé et ayant une température de cristallisation supérieure d'au moins 7°C à celle du polymère non-nucléé correspondant, la concentration du pigment coloré étant comprise entre 0,01 et 5 % en poids, calculé par rapport au poids de polymère propylène nucléé.

11. Procédé selon la revendication 10, dans lequel 100 parties en poids d'une composition propylène nucléé contenant environ 0,0001 à 1 % en poids d'unités dérivées d'un composé vinyle de formule : 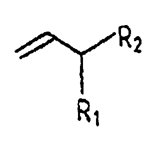 dans laquelle R₁ et R₂ pris ensemble forment un cycle à 5 ou 6 atomes, saturé ou non-saturé ou aromatique, ou représentent indépendamment un groupe alkyle inférieur comprenant 1 à 4 atomes de carbone, sont mélangées avec 0,01 à 5 parties en poids d'un pigment colorant choisi au sein du groupe des pigments blancs, des pigments verts, des pigments rouges, des pigments bleus et du noir de carbone pour donner une composition polypropylène colorée dont le retrait varie de moins de 5 % pour différents pigments colorés, ledit retrait étant calculé par comparaison de la dimension mesurée d'une boîte moulée par injection et de la dimension nominale du moule.

12. Utilisation d'une composition polymère selon l'une quelconque des revendications 1 à 9 pour la fabrication d'articles en polymère par moulage sous injection ou par moulage par compression, par thermoformage, par moulage/soufflage, par extrusion sous forme de film ou de feuille, par extrusion sous forme de tube ou de câble.

13. Utilisation selon la revendication 12, dans laquelle sont fabriqués des couvercles et des systèmes de fermeture pour des applications concernant les produits alimentaires, les produits d'usage ménager, les produits d'hygiène et les produits de santé.
